# FASCICULE DE BREVET EUROPEEN

(11) **EP 1 012 785 B1**
(45) Date de publication et mention de la délivrance du brevet: **18.09.2002**
(21) Numéro de dépôt: 98910789.1
(22) Date de dépôt: 18.02.1998
(51) Int. Cl.: G06K 19/077

(54) **PROCEDE DE FABRICATION DE CARTE A ANTENNE BOBINEE**
HERSTELLUNGSVERFAHREN EINER KARTE MIT GEWICKELTER ANTENNE
METHOD FOR MAKING CARDS WITH COILED ANTENNA

(30) Priorité: 24.02.1997 FR 9702145
(43) Date de publication de la demande: 28.06.2000
(73) Titulaire: GEMPLUS, 13881 Gémenos Cédex (FR)
(72) Inventeur: AYALA, Stéphane, F-13010 Marseille (FR)
(86) Numéro de dépôt international: FR9800316
(87) Numéro de publication internationale: WO98037512

(56) Documents cités:
- EP-A- 0 570 784
- EP-A- 0 723 244
- WO-A-96/17321
- DE-A- 4 437 721

## Description

L'invention concerne la fabrication des cartes à puces, et plus particulièrement des cartes capables de fonctionner sans contact à l'aide d'une antenne intégrée dans la carte. Sous cette appellation "carte sans contact", on envisagera d'une part les cartes ne pouvant communiquer avec l'extérieur que par l'intermédiaire de l'antenne, et aussi et surtout les cartes mixtes pouvant communiquer avec l'extérieur soit par l'intermédiaire de l'antenne soit par l'intermédiaire de contacts classiques normalisés.

De telles cartes sont destinées à réaliser diverses opérations, telles que, par exemple, des opérations bancaires, des communications téléphoniques, des opérations d'identification, des opérations de débit ou de rechargement d'unités de compte, et toutes sortes d'opérations qui peuvent s'effectuer soit en insérant la carte dans un lecteur soit à distance par couplage électromagnétique (en principe de type inductif) entre une borne d'émission-réception et une carte placée dans la zone d'action de cette borne.

Les cartes sans contact doivent avoir de préférence des dimensions normalisées identiques à celles des cartes à puces classiques pourvues de contacts. Ceci est évidemment tout particulièrement indispensable pour les cartes mixtes, et c'est souhaitable pour les cartes fonctionnant uniquement sans contact.

La norme usuelle ISO 7810 définit une carte de 85 mm de long, 54 mm de large, et 0,76 mm d'épaisseur. Les contacts affleurent à des positions bien définies à la surface de la carte.

Ces normes imposent des contraintes sévères pour la fabrication. L'épaisseur très faible de la carte est en particulier une contrainte majeure, plus sévère encore pour les cartes sans contact que pour les cartes simplement munies de contact, car il faut prévoir l'incorporation d'une antenne dans la carte.

Les problèmes techniques qui se posent sont des problèmes de positionnement de l'antenne par rapport à la carte, car l'antenne occupe presque toute la surface de la carte, des problèmes de positionnement du module de circuit intégré (comprenant la puce et ses contacts) qui assure le fonctionnement électronique de la carte, et des problèmes de précision et de fiabilité de la connexion entre le module et l'antenne; enfin, des contraintes de tenue mécanique, de fiabilité et de coût de fabrication doivent être prises en compte.

EP-A-0723244 divulgue un procédé de fabrication de carte sans contact comprenant une étape dans laquelle une antenne est fixée à un module suivie d' une étape dans laquelle l' ensemble antenne/module est calé dans des évidements (9,12,10,11,14) prévus dans des plaquettes (8,13,15). Ces plaquettes étant par la suite solidarisées de manière à enfermer ledit ensemble.

L'invention a pour but de proposer un procédé de fabrication qui permet de résoudre au mieux les différentes contraintes de dimensionnement, de précision de fabrication, de tenue mécanique, et plus généralement de fiabilité, de coût et de rendement de fabrication d'une carte dite mixte.

Cet objectif est atteint grâce à un procédé conforme à la revendication 1.

D'autres caractéristiques et avantages de l'invention apparaîtront à la lecture de la description. détaillée qui suit et qui est faite en référence aux dessins annexés dans lesquels :
- la figure 1 représente une antenne en fil bobiné réalisée dans un format pouvant être incorporé à une carte à puce;
- la figure 2 représente un module en vue de face, vue arrière, et vue en coupe, dans une réalisation sur film métallisé double face;
- la figure 3 représente l'ensemble antenne-module assemblé;
- la figure 4 représente la mise en place de l'ensemble antenne-module contre une plaquette de plastique au format de la carte, munie d'une feuille adhésive;
- la figure 5 représente la mise en place d'une autre plaquette de plastique pour recouvrir l'ensemble module;
- la figure 6 représente la carte finie, au stade d'enlèvement de la feuille adhésive et prête à être utilisée.

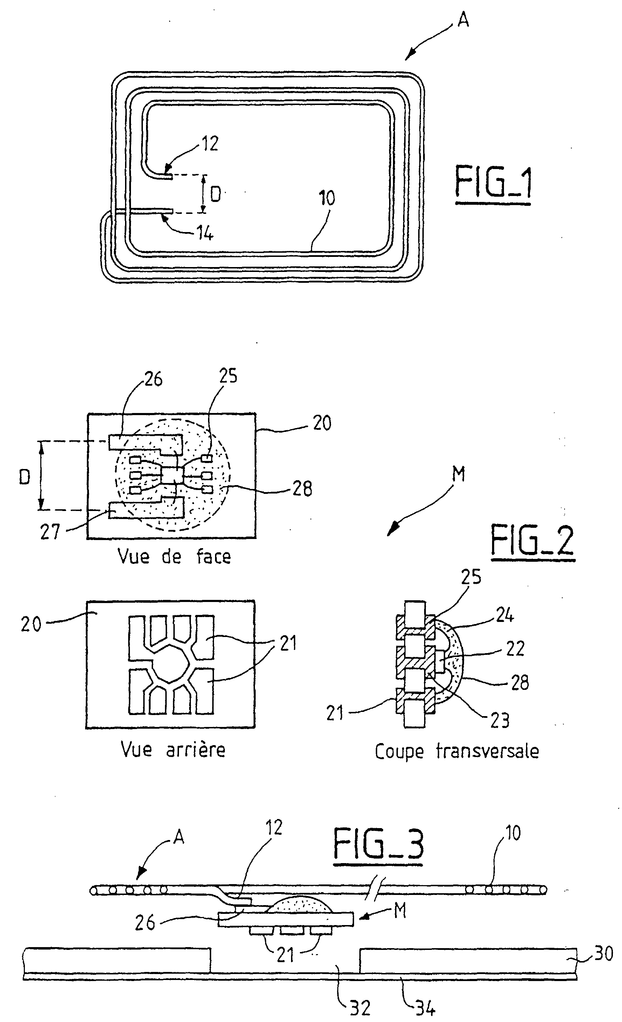

L'antenne A représentée à la figure 1 est un simple fil 10 bobiné à plat, la rigidité propre du fil étant suffisante pour que l'antenne soit manipulable pendant les opérations d'encartage en gardant sa forme globale plane. Cette antenne représente une inductance permettant une communication à distance par couplage électromagnétique de type inductif.

Le fil peut être revêtu d'un isolant évitant le contact entre spires adjacentes. En tous cas un isolant est prévu si les spires se croisent (cas où il y a plusieurs spires). Mais les extrémités du fil sont dénudées en vue de leur connexion électrique à un module de circuit intégré.

Les dimensions de l'antenne sont, pour des raisons de rendement électromagnétique, très proches des dimensions extérieures de la carte à puce, et c'est d'ailleurs une des raisons pour lesquelles le positionnement de l'antenne dans la carte doit être fait précisément.

Les extrémités 12 et 14 de l'antenne sont à une distance déterminée D l'une de l'autre, et sont de préférence tournées vers l'intérieur des spires, de manière que le module électronique puisse être placé du côté intérieur des spires, le périmètre de l'antenne se rapprochant alors le plus possible du périmètre de la carte à puce dans laquelle elle doit être noyée.

Le module M de la figure 2 comprend un film isolant 20, une métallisation de face avant, une métallisation de face arrière, et des vias conducteurs reliant les métallisations de face avant aux métallisations de face arrière. L'échelle relative des dimensions, en épaisseur surtout, n'est pas respectée, pour que les figures soient lisibles.

La métallisation de face arrière est découpée en contacts 21 au format normalisé pour les cartes à puces; ces contacts affleureront sur la carte à puce en fin de fabrication.

Une puce 22 est soudée sur une plage centrale 23 de la métallisation de face avant; des fils soudés 24 relient la puce à des plages de connexion 25 de la métallisation de face avant (d'autres modes de liaison pourraient être envisagés, par exemple une liaison directe dans le cas de puces retournées en mode "flip-chip").

Deux plages de connexion 26 et 27 sont réservées pour la fixation des extrémités de l'antenne A. Ces plages sont reliées électriquement à des plages de connexion 25 servant à recevoir des fils de la puce. En pratique, les plages 26 et 27 constituent des prolongements de deux plages de connexion 25, ces prolongements s'écartant suffisamment de la plage centrale sur laquelle est fixée la puce : la puce 22 est recouverte d'une goutte de résine de protection 28, mais les plages de connexion 26 et 27 s'écartent suffisamment de la plage centrale pour que la résine ne les recouvre pas.

Les plages de connexion 26 et 27 sont situées sur le film 20 à une distance l'une de l'autre correspondant sensiblement à la distance D entre les extrémités du fil d'antenne A, pour que ces extrémités puissent être soudées facilement sur les plages 26 et 27.

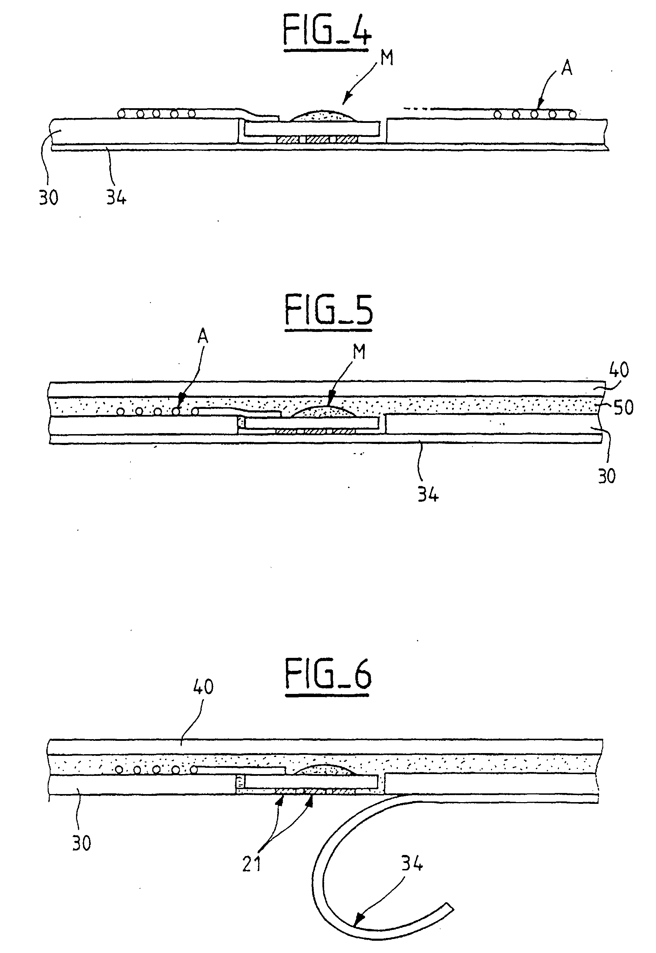

La figure 3 représente, en coupe latérale, l'ensemble antenne-module, après l'opération de soudage des extrémités d'antenne sur les plages 26 et 27; elle représente également une plaquette de matière plastique 30 (qui peut être déjà au format d'une carte à puce ou qui sera découpée ultérieurement à ce format). La matière plastique peut être du chlorure de polyvinylidène (PVC) ou une autre matière plastique.

Cette plaquette constitue une partie du corps de la carte à puce. Elle comporte une ouverture 32 pouvant servir de logement au module M, cette ouverture traversant toute l'épaisseur de la plaquette. Les dimensions de l'ouverture sont au moins égales à celles du module M. Si possible ces dimensions sont bien ajustées par rapport aux dimensions du module. La position de l'ouverture par rapport au format de la plaquette correspond à la position normalisée des contacts d'une carte à puce.

La face arrière de la plaquette est revêtue d'une feuille adhésive 34, dont la face adhésive est appliquée contre la plaquette. Cette feuille recouvre l'ouverture 32 de sorte qu'elle constitue un fond pour le logement constitué dans la carte par l'ouverture 32. Ce fond est adhésif.

La figure 4 représente la mise en place de l'ensemble antenne-module contre la plaquette 30, le module étant inséré dans le l'ouverture 32 et étant collé par la matière adhésive contre la feuille 34.

Le logement et la matière adhésive maintiennent l'ensemble antenne-module en position précise pendant les opérations suivantes qui introduisent des contraintes mécaniques. L'ensemble peut être revêtu à ce stade d'une résine épaisse qui améliore le maintien en place et qui servira de liant et de produit d'étanchéité protégeant l'antenne et le module.

Une autre plaquette 40 de matière plastique découpée au format de la carte à puce (sauf si le format est défini ultérieurement) est appliquée contre la face supérieure de l'ensemble ainsi réalisé, c'est-à-dire du côté de l'antenne et non de la feuille adhésive. (Fig 5). La matière plastique peut être du chlorure de polyvinylidène (PVC) ou autre.

Une opération de laminage, à froid ou à chaud est effectuée pour solidariser les plaquettes en enfermant l'ensemble antenne-module. Pour du laminage à froid, l'insertion d'une résine de collage (qui peut être la résine mentionnée ci-dessus) est nécessaire.

La figure 5 représente la carte à puce à ce stade, avec les plaquettes 30 et 40 de part et d'autre de l'ensemble antenne-module, et la résine liante 50 noyant l'ensemble entre les plaquettes.

La dernière opération (figure 6) consiste à décoller la feuille adhésive 34, faisant alors apparaître les contacts 21 dénudés de la carte à puce.

Le procédé qui vient d'être décrit serait également applicable dans le cas d'un module réalisé non pas à partir d'un film métallisé double face mais à partir d'une grille découpée aux formes de contacts nécessaires et revêtue d'un film isolant découpé pour mettre à nu une plage de fixation de puce, des plages de connexion pour les fils de puce, et des plages de connexion pour le fil d'antenne. Il serait cependant moins facile de souder le fil d'antenne dans ces dernières plages à cause de l'épaisseur du film isolant.

## Revendications

1. Procédé de fabrication d'une carte à puce mixte comportant une antenne (10) en fil bobiné à plat et un module (20) comportant des contacts d'accès dans lequel :
- on fixe les extrémités (12, 14) d'antenne à deux plages de connexion dudit module (20) ;
- on fixe provisoirement l'ensemble antenne/module (10, 20) contre une première plaquette (30) de matière plastique comportant une ouverture (32) servant de logement audit module (20) ;
- on place une deuxième plaquette (40) de matière plastique sur l'ensemble antenne/module (10, 20);
- on solidarise les deux plaquettes (30, 40) en enfermant ladite antenne (10) et ledit module (20), procédé dans lequel ladite fixation provisoire consiste à prévoir une feuille adhésive (34) sous ladite première plaquette (30), ledit module (20) étant appliqué contre la face adhésive de ladite feuille (34) à l'intérieur de ladite ouverture (32), le module étant inséré dans ladite ouverture de telle manière que les contacts affleurent au fond de l'ouverture.

2. Procédé selon la revendication 1, **caractérisé en ce que** ladite feuille adhésive (34) est détachée après solidarisation desdites plaquettes (30, 40).

3. Procédé selon l'une des revendications 1 et 2, **caractérisé en ce que** ledit module (20) est réalisé à partir d'un film à métallisations de face avant et métallisations de face arrière, des plages de connexion d'antenne (26, 27) étant situées sur la face avant et les contacts d'accès (21) à ladite carte étant situés sur la face arrière.

4. Procédé selon l'une des revendications 1 à 3, **caractérisé en ce que** la puce (22) dudit module (20) est noyée dans une résine de protection (28) avant que ledit module ne soit inséré dans ladite carte, ladite résine de protection (28) ne recouvrant pas les plages de connexion destinées à ladite antenne (10).

5. Procédé selon l'une des revendications 1 à 4, **caractérisé en ce qu'**une résine de collage et d'étanchéité (50) est déposée sur l'ensemble antenne/module (10, 20) avant solidarisation desdites plaquettes (30, 40).

## Patentansprüche

1. Herstellungsverfahren einer gemischten Chipkarte mit einer Antenne (10) aus flach gewickeltem Draht und einem Modul (20) mit Zugangskontakten, bei dem man:
- die Enden (12, 14) der Antenne an zwei Anschlussbereichen des besagten Moduls (20) befestigt;
- die Baugruppe Antenne/Modul (10, 20) provisorisch gegen eine erste Platte (30) aus Kunststoff befestigt, die eine Öffnung (32) zur Aufnahme des besagten Moduls (20) aufweist;
- eine zweite Platte (40) aus Kunststoff auf die Baugruppe Antenne/Modul (10, 20) setzt;
- die beiden Platten (30, 40) unter Einschluss der besagten Antenne (10) und des besagten Moduls, (20) verfestigt,
Verfahren, bei dem die besagte provisorische Befestigung darin besteht, eine Klebfolie (34) unter der besagten ersten Platte (30) vorzusehen, wobei das besagte Modul (20) gegen die klebende Seite der besagten Folie (34) innerhalb der besagten Öffnung (32) gedrückt wird, wobei das Modul in die besagte Öffnung so eingefügt wird, dass die Kontakte am Öffnungsboden heraustreten.

2. Verfahren nach Anspruch 1, **dadurch gekennzeichnet, dass** die besagte Klebfolie (34) nach Verfestigung der besagten Platten (30, 40) abgelöst wird.

3. Verfahren nach einem der Ansprüche 1 und 2, **dadurch gekennzeichnet, dass** das besagte Modul (20) aus einer an der Vorderseite und der Rückseite metallisierten Folie hergestellt wird, wobei sich Antennenanschlussbereiche (26, 27) an der Vorderseite und die Zugangskontakte (21) zur besagten Karte an der Rückseite befinden.

4. Verfahren nach einem der Ansprüche 1 bis 3, **dadurch gekennzeichnet, dass** der Chip (22) des besagten Moduls (20) vor. Einfügung des besagten Moduls in die besagte Karte in ein Schutzharz (28) eingebettet wird, wobei das besagte Schutzharz (28) die Anschlussbereiche für die besagte Antenne (10) nicht abdeckt.

5. Verfahren nach einem der Ansprüche 1 bis 4, **dadurch gekennzeichnet, dass** vor Verfestigung der besagten Platten (30, 40) ein Kleb- und Dichtungsharz (50) auf die Baugruppe Antenne/Modul (10, 20) aufgetragen wird.

## Claims

1. A method of manufacturing a mixed chip card having an antenna (10) made from wire coiled flat and a module (20) comprising access contacts, in which:
- the antenna ends (12, 14) are fixed to two connection areas of the said module (20);
- the antenna/module assembly (10, 20) is temporarily fixed against a first wafer (30) made of plastics material comprising an opening (32) serving as a housing for the said module (20);
- a second wafer (40) of plastics material is placed on the antenna/module assembly (10, 20);
- the two wafers (30, 40) are fixed together, enclosing the said antenna (10) and the said module (20), a method in which the said temporary fixing consists of providing an adhesive sheet (34) under the said first wafer (30), the said module (20) being applied against the adhesive face of the said sheet (34) inside the said opening (32), the module being inserted in the said opening so that the contacts fit flush with the bottom of the opening.

2. A method according to Claim 1, **characterised in that** the said adhesive sheet (34) is detached after fixing of the said wafers (30, 40).

3. A method according to one of Claims 1 and 2, **characterised in that** the said module (20) is produced from a film with front-face metallisations and rear-face metallisations, antenna connection areas (26, 27) being situated on the front face and the contacts (21) for access to the said card being situated on the rear face.

4. A method according to one of Claims 1 to 3, **characterised in that** the chip (22) of the said module (20) is embedded in a protective resin (28) before the said module is inserted in the said card, the said protective resin (28) not covering the connection areas intended for the said antenna (10).

5. A method according to one of Claims 1 to 4, **characterised in that** a bonding and sealing resin (50) is deposited on the antenna/module assembly (10, 20) before the fixing of the said wafers (30, 40).
